# EUROPEAN PATENT SPECIFICATION

(11) **EP 1 775 200 B1**
(45) Date of publication and mention of the grant of the patent: **10.02.2010**
(21) Application number: 06021414.5
(22) Date of filing: 12.10.2006
(51) Int. Cl.: B62D 25/08, B60H 1/00

(54) **Front construction of motor vehicle**
Kraftfahrzeugvorderstruktur
Construction avant de véhicule automobile

(30) Priority: 14.10.2005 JP 2005300571
(43) Date of publication of application: 18.04.2007
(73) Proprietor: Daihatsu Motor Co., Ltd., Ikeda-shi Osaka 563-8651 (JP); TOYOTA JIDOSHA KABUSHIKI KAISHA, Toyota-shi, Aichi-ken, 471-8571 (JP)
(72) Inventor: Kuramoto, Yoshinao, Ikeda-shi, Osaka 563-8651 (JP)
(74) Representative: Kramer - Barske - Schmidtchen

(56) References cited:
- EP-A- 1 616 735
- DE-A1- 10 329 854
- DE-A1- 19 540 020
- GB-A- 2 017 896
- JP-A- 11 001 121
- US-A- 4 721 032

## Description

### BACKGROUND OF THE INVENTION

### TECHNICAL FIELD OF THE INVENTION

The present invention relates to a front construction of a motor vehicle which includes a front cowl which makes up a frame member at a front part of a vehicle body and an air conditioner which introduces outside air thereinto through an interior space of the front cowl so as to enable the conditioning of inside air within a passenger compartment.

### DESCRIPTION OF THE RELATED ART

A related art front construction of a motor vehicle is described in JP-A-2004-203169 below. According to the vehicle body front construction described in this Japanese patent unexamined publication, the front construction of a motor vehicle includes a front cowl which extends in a transverse direction of a vehicle body and which is formed to have a U-shaped cross section as viewed from a side of the vehicle body, a windshield which extends upward while inclined rearward from a front cowl side of an opening at the front of the vehicle body and which is supported on a rear vertical wall of the front cowl along a front lower edge portion thereof and an air conditioner in which an opening edge portion of an outside air inlet port through which outside air introduced thereto through an interior space of the front cowl is then introduced into the air conditioner is connected to a longitudinal portion of the rear vertical wall of the front cowl.

The front cowl makes up a frame member at the front of the vehicle body, and a passenger compartment is defined therebehind. The air conditioner is disposed at the front of the passenger compartment. When this air conditioner is activated, outside air is introduced into an interior of the air conditioner through the interior space of the front cowl and the outside air inlet port and is then supplied toward the passenger compartment, so as to enable the conditioning of inside air within the passenger compartment.

Incidentally, in the related art, the outside air inlet port is made large as viewed from the side of the vehicle body, and the opening edge portion is connected to the longitudinal portion of the rear vertical wall along the full length thereof as viewed from the side of the vehicle body. In addition, normally, a gap between the rear vertical wall and the opening edge portion is sealed sufficiently so as to prevent the passage of rainwater that has entered the interior space of the front cowl through the gap to intrude into the passenger compartment. In addition, in this case, a large magnitude of rigidity is secured at the opening edge portion in order to increase the sealing properties, and a sealing member is interposed between the rear vertical wall and the opening edge portion.

As a result of this configuration, the longitudinal portion of the rear vertical wall is reinforced strongly and rigidly as a whole as viewed from the side of the vehicle by the opening edge portion whose rigidity is so increased. There may be, however, caused a risk that this construction causes the following problems.

Namely, it is assumed that some object comes to collide against a motor vehicle having this construction from the front thereof while the motor vehicle is traveling forward (a frontal collision), and then that the object that has been thrown up in the air as a result of the collision collides against the windshield of the vehicle body from above, whereby an impact force produced by the collision is applied to the rear vertical wall of the front cowl.

In this case, as has been described above, the rear vertical wall is reinforced strongly and rigidly as a whole as viewed from the side of the vehicle by the opening edge portion of the outside air inlet port of the air conditioner. Due to this, it is difficult to absorb sufficiently impact energy based on the impact force by virtue of plastic deformation of the rear vertical wall, and hence, it is considered difficult to mitigate sufficiently the impact force that is imparted to the vehicle body and the object.

In addition, as has been described above, the longitudinal portion of the rear vertical wall is reinforced strongly and rigidly as a whole as viewed from the side of the vehicle body. Due to this, stress concentration tends to occur at other portions of the rear vertical wall which are adjacent to the relevant portion of the rear vertical wall in the longitudinal direction of the rear vertical wall. Consequently, when looking at the front cowl as a whole along the longitudinal direction thereof, there is caused a risk that the NV (noise and vibration) performance of the front cowl is reduced.

US 4,721,032 relates to an arrangement for forming an automobile cowl structure, comprising a windshield supporting frame with a closed cross section provided for supporting a lower end of a front windshield and composed of a cowl top member formed in the shape of a bank protruding upward and elongating along the front windshield in the direction of the width of an automobile body construction and a cowl cover panel provided with the cowl top member fixed thereon and having a prolongation thereof horizontally extending backward beyond a rear end portion of the cowl top member, and an upper dash panel having a rear end wall portion thereof connected to a rear end portion of the prolongation of the cowl cover panel at its upper end.

DE 103 29 854 A1 relates to a structure of an outside air inlet duct provided between a cowl grill provided in a rear side of a hood and an opening part provided on a dash panel partitioning an engine compartment and a passenger compartment, and introducing outside air into the passenger compartment.

GB 2,017,896 A discloses an air ventilation apparatus mounted in a vehicle having a partition wall and an instrument panel, which are spaced from each other to define a considerable space therebetween, said partition wall being formed with an opening, which is communicable with the open air surrounding said vehicle, said ventilation apparatus comprising a hollow body having a first open end thereof attached to said partition wall to open said opening in the same and a second open end thereof supported by said instrument panel, and a guide member mounted on the mouth of said first open end of said hollow body, said guide member being such shaped and constructed to aid in locating the first open end during the connection of the same to said partition wall, while allowing air to flow thereover to enter said hollow body.

### SUMMARY OF THE INVENTION

The invention was made in view of the situations, and an object thereof is to provide a front construction of a motor vehicle in which an opening edge portion of an outside air inlet port of an air conditioner is connected to a rear vertical wall of a front cowl, wherein in the event that some object is brought into collision with a front part of a vehicle body, whereby an impact force produced as a result of the collision is applied to the rear vertical wall, impact energy based on the impact force is enabled to be absorbed sufficiently so as to mitigate more sufficiently the impact force that is imparted to the vehicle body and the object.

The another object of the invention is to increase the NV performance when the front cowl is taken into consideration as a whole in the longitudinal direction thereof.

According to the invention, there is provided a front construction of a motor vehicle according to claim 1. Further developments of the present invention are set out in the dependent claims.

The invention provides the following advantages.

It is assumed that an object, which has been thrown up in the air as a result of a frontal collision of a motor vehicle having the aforesaid front construction of a motor vehicle, is brought into collision with a front part of a vehicle body of the motor vehicle from above, whereby an impact force produced as a result of the collision is applied to the rear vertical wall of the front cowl. Then, both the brittle portions are deformed plastically together to thereby not only induce a plastic deformation of the rear vertical wall but also promote the plastic deformation of the rear vertical wall.

Moreover, as has been described above, since both the brittle portions are positioned at substantially the same height relative to each other, the brittle portion formed on either of the rear vertical wall of the front cowl and the opening edge portion of the outside air inlet port of the air conditioner is prevented from being reinforced by the other, whereby both the brittle portions are plastically deformed together substantially at the same time by the impact force to thereby ensure the promotion of the plastic deformation of the rear vertical wall.

Consequently, the impact energy based on the impact force is absorbed sufficiently by virtue of the plastic deformation of the rear vertical wall, so that the impact force that is imparted to the vehicle body and the object is mitigated more sufficiently.

In addition, as has been described above, the brittle portions are formed on the opening edge portion of the outside air inlet port and the portion of the rear vertical wall where the opening edge portion is connected thereto, respectively.

Due to this, a remarkable increase in strength of the longitudinal portion of the rear vertical wall where the opening edge portion of the outside air inlet port is connected compared to other portions of the rear vertical wall which are adjacent to the longitudinal portion thereof due to the strong and rigid reinforcement by the opening edge portion is prevented by both the brittle portions. Consequently, the occurrence of stress concentrations at the other portions of the rear vertical wall is prevented, whereby the NV performance of the front cowl is increased when the front cowl is taken into consideration as a whole in the longitudinal direction thereof.

### BRIEF DESCRIPTION OF THE DRAWINGS

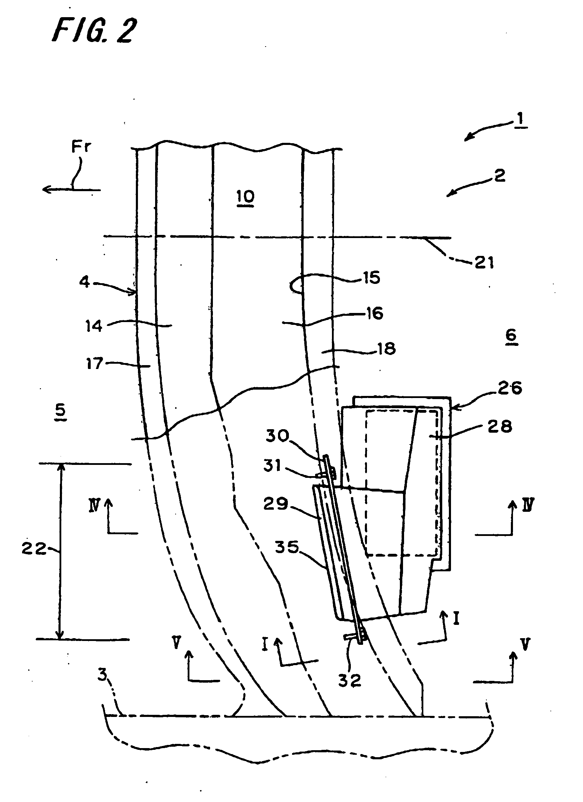

Fig. 1 is a sectional view taken along the line I-I in Fig. 2 and viewed in a direction indicated by arrows attached to the line.
Fig. 2 is a partial plan view of a front part of a vehicle body.

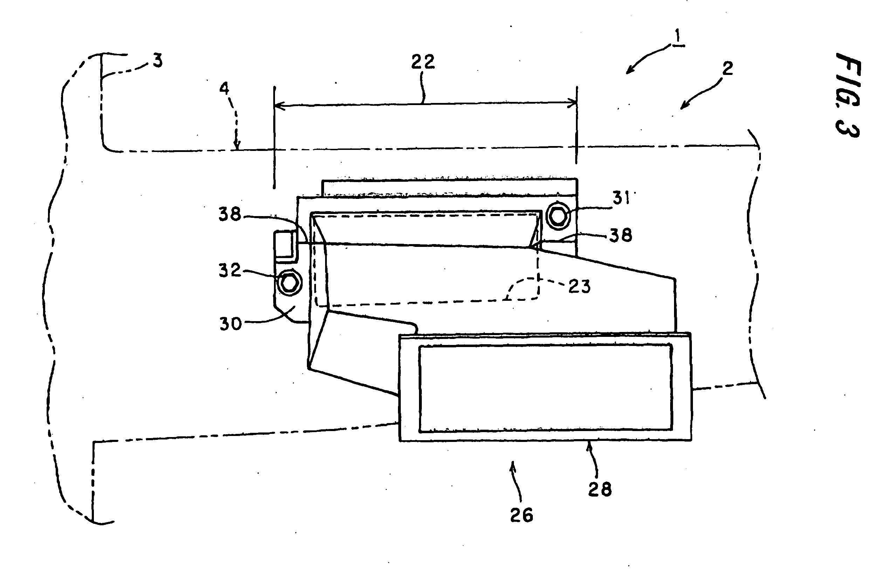

Fig. 3 is a partial rear view of the front part of the vehicle body.
Fig. 4 is a sectional view taken along the line IV-IV in Fig. 2 and viewed in a direction indicated by arrows attached to the line.

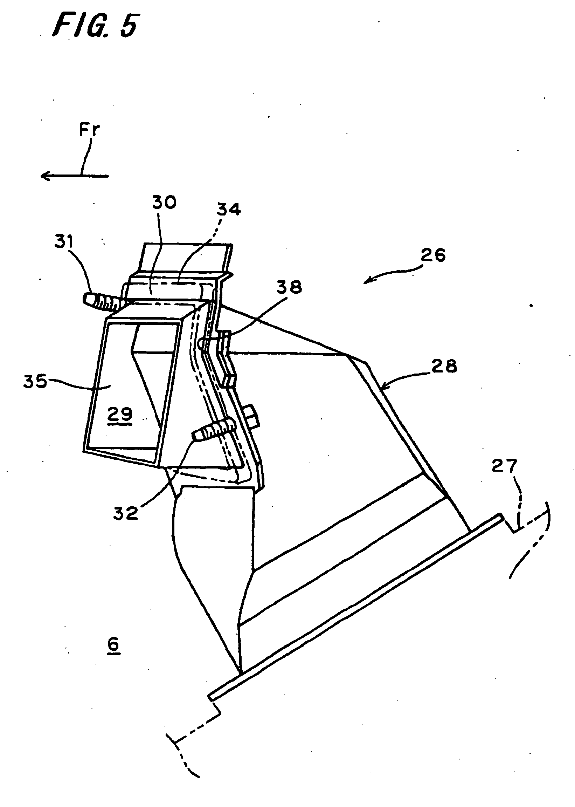

Fig. 5 is a sectional view taken along the line V-V in Fig. 2 and viewed in a direction indicated by arrows attached to the line.

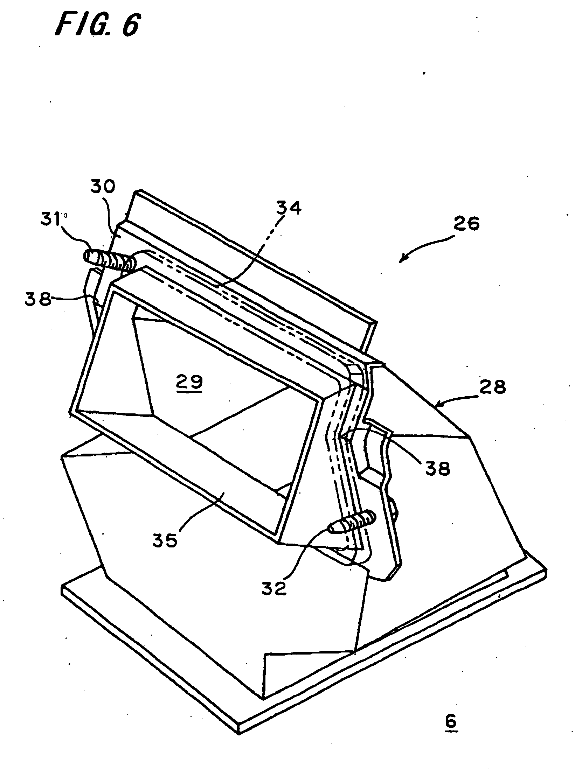

Fig. 6 is a perspective view of an air conditioner duct of an air conditioner.

### DETAILED DESCRIPTION OF THE INVENTION

In relation to a front construction of a motor vehicle of the invention, with a view to realizing an object that in a front construction of a motor vehicle in which an opening edge portion of an outside air inlet port of an air conditioner is connected to a rear vertical wall of a front cowl, when some object is brought into collision with a front part of a vehicle body, whereby an impact force is applied to the rear vertical wall, impact energy based on the impact force so applied is sufficiently absorbed, so that the impact force that is imparted to the vehicle body and the object is mitigated more sufficiently, a preferred embodiment for carrying out the invention is as follows.

Namely, a front construction of a motor vehicle includes a front cowl which extends in a transverse direction of a vehicle body and which is formed to have a U-shaped cross section as viewed from a side of the vehicle body and an air conditioner in which an opening edge portion of an outside air inlet port through which outside air introduced thereto through an interior space of the front cowl is introduced into the air conditioner is connected to a rear vertical wall of the front cowl. Brittle portions are formed at vertical halfway portions of the opening edge portion of the outside air inlet port and a portion of the rear vertical wall where the opening edge portion is connected thereto, respectively, for promoting the plastic deformation of the front cowl when an impact force is applied to the front cowl in such a manner that both the brittle portions are positioned at substantially the same height relative to each other.

### [Embodiment]

With a view to describing the invention in greater detail, an embodiment thereof will be described according to the accompanying drawings.

In the figures, reference numeral 1 denotes a motor vehicle, and an arrow Fr indicates the front of a traveling direction of the motor vehicle 1.

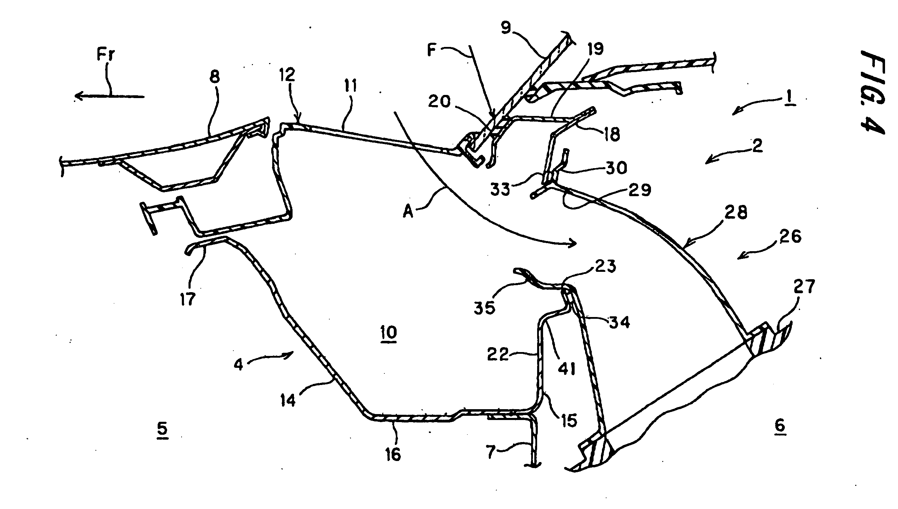

A front part of a vehicle body 2 of the motor vehicle 1 includes front pillars 3 which make up side portions thereof, respectively, a front cowl 4 which is provided to extend in a transverse direction of the vehicle body 2 between the front pillars 3 and is formed to have a U-shaped cross section as viewed from a side of the vehicle body 2 (Fig. 4), a dash panel 7 which extends downward from the front cowl 4 and functions as a partition which separates an engine compartment 5 which is defined at a front part of the vehicle body 2 from a passenger compartment 6 which is defined at a rear part of the vehicle body 2, a hood 8 which can be closed to cover the engine compartment 5 from thereabove, a windshield 9 which extends upward while inclined rearward from a front cowl 4 side of an opening in the front of the passenger compartment 6 and which is supported on the front cowl 4 along a lower edge portion thereof, so as to cover the front of an upper part of the passenger compartment 6 and a resin cowl louver 12 which covers an interior space 10 of the front cowl 4 from thereabove and has a plurality of vent holes 11 formed therein.

The front pillars 3 and the front cowl 4 are both made of sheet metal and are made to constitute frame members of the vehicle body 2. The front cowl 4 includes front and rear vertical walls 14, 15 which are spaced apart longitudinally to face each other, a bottom plate 16 which connects together respective lower edge portions of the vertical walls 14, 15, front and rear outwardly oriented flanges 17, 18 which are formed integrally with upper edge portions of the vertical walls 14, 15, respectively, and a reinforcement plate 19 which extends in the transverse direction of the vehicle body 2 and which is connected to the rear outwardly oriented flange 18 so as to reinforce the rear vertical wall 15. The front vertical wall 14 extends upward while inclined forward from a front edge portion of the bottom plate 16, while the rear vertical wall 15 extends upward substantially perpendicularly from a rear edge portion of the bottom plate 16.

An upper edge portion of the dash panel 7 is connected to the bottom plate 16 of the front cowl 4. In addition, a front lower edge portion of the windshield 9 is supported on the reinforcement plate 19 of the front cowl via a sealing member 20 and is also supported on the rear vertical wall 15 via the reinforcement plate 19. The vehicle body 2 is formed into an approximately transversely symmetrical shape based on a transverse center line 21 of the vehicle body.

An opening 23 is formed in an upper part of a portion 22 the rear vertical wall 15 in the longitudinal direction thereof (in the transverse direction of the vehicle body 2) in such a manner as to establish a communication between the inside and outside of the front cowl 4, and this opening 23 is formed into a transversely elongated rectangular shape to thereby secure a sufficiently large area. The portion 22 of the rear vertical wall 15 is situated on one side portion (a leftward portion) of the rear vertical wall 15.

An air conditioner 26 for the passenger compartment 6 is provided behind the dash panel 7 in a front part of the passenger compartment 6. This air conditioner 26 includes an air conditioner main body 27 which has an electric fan, not shown, ant the like and which is supported on the dash panel 7, and an air conditioner duct 28 made from a resin which extends from the air conditioner main body 27.

An extended end portion of the air conditioner duct 28 is made to constitute an outside air inlet port 29 which introduces outside air A into the air conditioner 26 through the interior space 10 of the front cowl 4. An outwardly oriented flange is formed integrally on the extended end portion of the air conditioner duct 28, and this outwardly oriented flange is made to constitute an opening edge portion 30 of the outside air inlet port 29. This opening edge portion 30 is connected to an exterior surface of an opening edge portion 33 of the opening 23 in the rear vertical wall 15 by virtue of fastening with a plurality of (two) upper and lower fastening members 31, 32. In addition, a sealing member 34 is interposed between both the opening edge portions 30, 33, so as to establish a seal between both the opening edge portions 30, 33.

A water intrusion preventive rib 35 is provided which protrudes integrally from the opening edge portion 30 of the outside air inlet port 29 and fits in the opening 23 in the rear vertical wall 15. The water intrusion preventive rib 35 is formed into a pyramid-like tubular shape whose area decreases as the rib 35 extends toward the front and the interior of the interior space of the front cowl 4.

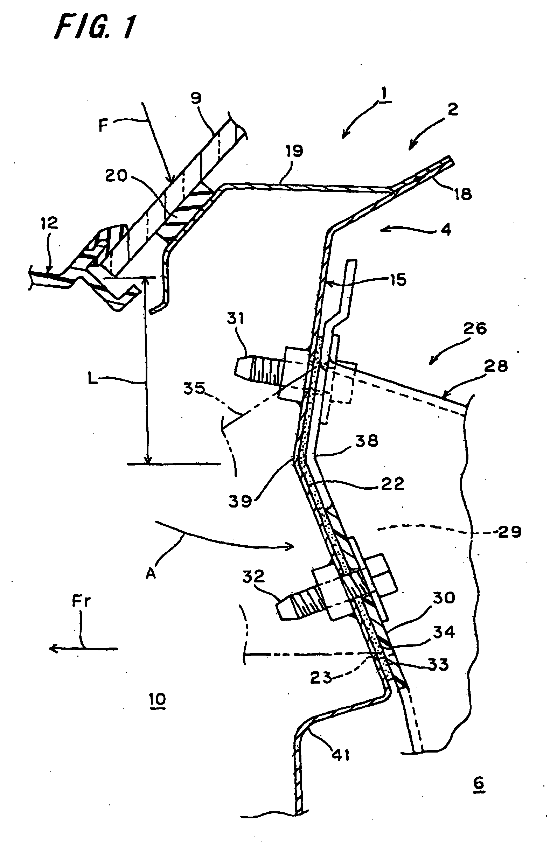

Brittle portions 38, 39 are formed at vertical halfway portions (substantially central portions) of the opening edge portion 30 of the outside air inlet port 20 and the opening edge portion 33 of the opening 23 where the opening edge portion 30 is connected to the rear vertical wall 15, respectively. These brittle portions 38, 39 are such as to induce a plastic deformation of the rear vertical wall 15 of the front cowl 4 and enable the promotion of the plastic deformation when an impact force F is applied to the front cowl 4. The vertical halfway portions of respective side portions of the opening edge portions 30, 33 are bent at substantially the same angle into a V-shape so as to form a forwardly protruding convex shape as viewed from a side of the vehicle body (Fig. 1), whereby the brittle portions 38, 39 are formed. In addition, both the brittle portions 38, 39 are formed at substantially the same height relative to each other and made to lie close to each other. Namely, both the brittle portions 38, 39 are fitted in or on each other and are joined together over their areas as a whole via the sealing member 34.

The lower edge portion of the windshield 9 and the brittle portions 38, 39 are positioned to lie close to each other in the longitudinal direction of the vehicle body 2, and a spacing distance L at which the lower edge portion of the windshield 9 and each of the brittle portions 38, 39 are spaced apart from each other in a vertical direction is designed to fall within a predetermined distance range. This predetermined distance range is in the range of 60 to 80 mm.

A lower part of the portion 22 of the rear vertical wall 15 is bent in a zigzag fashion into an S- or Z-shape as viewed from the side of the vehicle body (Fig. 4), and this portion is made to constitute another brittle portion 41. This third brittle portion 41 is also such as to induce a plastic deformation in the rear vertical wall 15 of the front cowl 4 and enables the promotion of the plastic deformation when the impact force F is applied to the front cowl 4.

When the air conditioner 26 is activated, outside air A is passed sequentially through the vent holes 11 in the cowl louver 12, the interior space 10 of the front cowl 4 and the outside air inlet port 29 of the air conditioner duct 28 so as to be introduced into an interior of the air conditioner main body 27 and is thereafter supplied toward the passenger compartment 6, whereby the conditioning of inside air within the passenger compartment 6 is enabled. When it rains, rainwater passes through the vent holes 11 in the cowl louver 12 to enter the interior space 10 of the front cowl 4. However, the intrusion of rainwater into the outside air inlet port 29 is prevented by the water intrusion preventive rib 35. In addition, the intrusion of rainwater into the passenger compartment 6 through a gap between both the opening edge portions 30, 33 is prevented by the sealing member 34.

It is assumed that an object, which is thrown up in the air as a result of a frontal collision of the motor vehicle 1, is brought into collision with the windshield 9 at the front of the vehicle body 2 from thereabove, an impact force F resulting from the downward collision of the object against the windshield 9 is applied to the rear vertical wall 15 of the front cowl 4. Then, both the brittle portions 38, 39 and the third brittle portion 41 are deformed plastically together to induce a plastic deformation of the rear vertical wall 15 and promote the plastic deformation thereof.

Moreover, as has been described above, since both the brittle portions 38, 39 are situated at substantially the same height relative to each other, the reinforcement of the brittle portion 38 formed on either of the rear vertical wall 15 of the front cowl 4 and the opening edge portion 30 of the outside air inlet port 29 of the air conditioner 26 (in this case, for example, on the opening edge portion 30 of the outside air inlet port 29) by the other (in this case, for example, the rear vertical wall of the front cowl 4) is prevented, and both the brittle portions 38, 39 are plastically deformed together at almost the same time, so as to ensure the promotion of the plastic deformation of the rear vertical wall 15.

Consequently, impact energy based on the impact force F is absorbed sufficiently by virtue of the plastic deformation of the rear vertical wall 15, whereby the impact force that is imparted to the vehicle body 2 and the object is mitigated more sufficiently.

As has been described above, the brittle portions 38, 39 are formed on the opening edge portion 30 of the outside air inlet port 29 and the opening edge portion 33 of the opening 23 which constitutes the portion of the rear vertical wall 15 where the opening portion 30 is connected thereto, respectively.

Due to this, a remarkable increase in strength of the longitudinal portion 22 of the rear vertical wall 15 where the opening edge portion 30 of the outside air inlet port 29 is connected compared to other portions of the rear vertical wall 15 which are adjacent to the longitudinal portion 22 thereof due to the strong and rigid reinforcement by the opening edge portion 30 is prevented by both the brittle portions 38, 39. Consequently, the occurrence of stress concentrations at the other portions of the rear vertical wall 15 is prevented, whereby the NV performance of the front cowl 4 is increased when the front cowl 4 is taken into consideration as a whole in the longitudinal direction thereof.

Moreover, the brittle portions 38, 39 are formed by bending the opening edge portions 30, 33.

Here, in general, cross sections of portions of the front cowl 4 in the longitudinal direction thereof are such that respective vertical portions of the relevant portions are bent. Then, in the event that heights and shapes of these bent portions are made to substantially coincide with those of the brittle portions 38, 39 which are formed by means of the bending described above, the cross sections of the longitudinal portions of the front cowl 4 can be made to be uniform relative to each other. Consequently, in this point, too, the occurrence of stress concentration at the longitudinal portion of the rear vertical wall 15 can be prevented, thereby making it possible to increase the NV performance of the front cowl 4.

In addition, as has been described above, the opening 23 of the rear vertical wall 15 is formed into the longitudinally elongated rectangular shape in the longitudinal direction of the front cowl 4, the opening edge portion 30 of the outside air inlet port 29 is connected to the upper part of the portion 22 of the rear vertical wall 15, and the third brittle portion 41 is formed at the lower part of the portion 22 of the rear vertical wall 15.

Due to this, the remarkably strong and rigid reinforcement of the portion 22 of the rear vertical wall 15 by the opening edge portion 30 is also prevented by the third brittle portion 41. Consequently, the occurrence of stress concentration at the other portions of the rear vertical wall 15 is prevented in an ensured fashion, thereby making it possible to increase further the NV performance of the front cowl 4.

In addition, as has been described above, the spacing distance L at which the front lower edge portion of the windshield 9 is spaced apart from the brittle portions 38, 39 is designed to fall within the predetermined distance range.

Here, it is assumed that the spacing distance L is less than the predetermined distance range. In this case, when the impact force F is applied to the windshield 9, whereby the brittle portions 38, 39 start to be plastically deformed, the front lower edge portion of the windshield 9 which descends in association with the plastic deformation of the brittle portions 38, 39 immediately comes into abutment with the brittle portions 38, 39. Then, a lower part of the rear vertical wall 15 which lie further downward than the brittle portions 38, 39 supports the front lower edge portion of the windshield 9 to interrupt the descending thereof. Consequently, the absorption of impact energy based on the impact force F by virtue of the plastic deformation of the brittle portions 38, 39 tends to be insufficient.

On the contrary, it is assumed that the spacing distance L exceeds the predetermined distance range. In this case, a height dimension of an upper part of the rear vertical wall 15 which lies further upward than the brittle portions 38, 39 becomes excessive. Due to this, when the impact force F is applied to the windshield 9, an area deformation of the upper part of the rear vertical wall 15 progresses, and the promotion of the plastic deformation of the rear vertical wall 15 by the brittle portions 38, 39 is disturbed. Consequently, in this case, too, the absorption of impact energy based on the impact force F by virtue of the plastic deformation of the brittle portions 38, 39 tends to be insufficient.

Then, the spacing distance L is determined to fall within the predetermined distance range.

Note that while the description of the invention has been made by reference to the example illustrated in the accompanying drawings, the brittle portions 38, 39 may be formed into other forms such as a slit and a notch than the aforesaid bent shape. In addition, the opening edge portion 30 of the outside air inlet port 29 may be connected to the rear vertical wall 15 over almost the whole area thereof. Furthermore, the water intrusion preventive rib 35 may be omitted.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A front construction of a motor vehicle (1) comprising:
a front cowl (4) which extends in a transverse direction of the vehicle body (2) and is formed to have a U-shaped cross section as viewed from a side of the vehicle body (2); and
an air conditioner (26) having an outside air inlet port (29) for introducing outside air through an interior space (10) of the front cowl (4), an opening edge portion (30) of the outside air inlet port (29) being connected to a rear vertical wall (15) of the front cowl (4),
**characterized in that**
brittle portions (38, 39) being plastically deformable are respectively formed at vertical halfway portions of the opening edge portion (30) of the outside air inlet port (29) and a portion of the rear vertical wall (15) where the opening edge portion (30) is connected thereto, in such a manner that both the brittle portions (38, 39) are positioned at substantially the same height relative to each other, for promoting the plastic deformation of the front cowl when an impact force is applied to the front cowl.

2. The front construction according to claim 1, **characterized in that** the brittle portions (38, 39) are present in a V-shape at substantially the same angle.

3. The front construction according to claim 1 or 2, **characterized in that** the brittle portions (38, 39) have a forwardly protruding convex shape as viewed from a side of the vehicle body (2).

4. The front construction according to any one of claims 1 to 3, **characterized in that** a sealing member (34) is interposed between the opening edge portion (30) of the outside air inlet port (29) and a portion of the rear vertical wall (15) where the opening edge portion (30) is connected thereto.

5. The front construction according to any one of claims 1 to 4, wherein a plurality of fastening members (31, 32) fasten the opening edge portion (30) of the outside air inlet port (29) and a portion of the rear vertical wall (15) where the opening edge portion (30) is connected thereto.

6. The front construction according to any one of claims 1 to 5, **characterized in that** the front construction further comprises a water intrusion preventive rib (35) that protrudes integrally from the opening edge portion (30) of the outside air inlet port (29) and fits in an opening (23) provided in the rear vertical wall (15).

7. The front construction according to claim 6, **characterized in that** the water intrusion preventive rib (35) is formed into a pyramid-like tubular shape whose area decreases as the rib (35) extends toward the interior of the interior space (10) of the front cowl (4).

8. The front construction according to any one of claims 1 to 7, **characterized in that** a windshield (9) is supported on the front cowl (4) at a lower edge portion thereof, and a spacing distance (L) at which the lower edge portion of the windshield (9) and each of the brittle portions (38, 39) are spaced apart from each other in a vertical direction is designed to fall within the range of 60 to 80 mm.

9. The front construction according to any one of claims 1 to 8, **characterized in that** a lower part of the portion of the rear vertical wall (15) has another brittle portion (41) being plastically deformable.

10. The front construction according to claim 9, **characterized in that** the another brittle portion (41) is an S- or Z-shaped bend as viewed from the side of the vehicle body (2).

11. The front construction according to any one of claims 1 to 10, **characterized in that** the brittle portion(s) (38, 39, 41) include(s) a slit or a notch.

## Patentansprüche

1. Vorderstruktur (1) eines Kraftfahrzeugs, umfassend:
eine vordere Stirnwand (4), die sich in einer Querrichtung der Fahrzeugkarosserie (2) erstreckt und so ausgebildet ist, dass sie von einer Seite der Fahrzeugkarosserie (2) her betrachtet einen U-förmigen Querschnitt aufweist, und
eine Klimatisierungseinrichtung (26), die eine Einlassöffnung für Außenluft (29) zum Einführen von Außenluft durch einen inneren Raum (10) der vorderen Stirnwand (4) aufweist, wobei ein Öffnungskantenabschnitt (30) der Einlassöffnung für Außenluft (29) mit einer hinteren vertikalen Wand (15) der vorderen Stirnwand (4) verbunden ist,
**dadurch gekennzeichnet, dass**
zerbrechlichen Abschnitte (38, 39), die plastisch verformbar sind, jeweils an vertikalen, auf halbem Weg liegenden Abschnitten des Öffnungskantenabschnitts (30) der Einlassöffnung für Außenluft (29) und einem Abschnitt der hinteren vertikalen Wand (15), wo der Öffnungskantenabschnitt (30) damit verbunden ist, in einer Weise ausgebildet sind, dass beide zerbrechlichen Abschnitte (38, 39) im Wesentlichen in der gleichen Höhe relativ zueinander positioniert sind, um die plastische Verformung der vorderen Stirnwand zu fördern, wenn auf die vordere Stirnwand eine Stoßkraft ausgeübt wird.

2. Vorderstruktur nach Anspruch 1, **dadurch gekennzeichnet, dass** die zerbrechlichen Abschnitte (38, 39) in einer V-Form bei im Wesentlichen dem gleichen Winkel vorliegen.

3. Vorderstruktur nach Anspruch 1 oder 2, **dadurch gekennzeichnet, dass** die zerbrechlichen Abschnitte (38, 39) eine nach vorne gewölbte konvexe Form aufweisen, betrachtet von einer Seite der Fahrzeugkarosserie (2).

4. Vorderstruktur nach einem der Ansprüche 1 bis 3, **dadurch gekennzeichnet, dass** ein Dichtungselement (34) zwischen dem Öffnungskantenabschnitt (30) der Einlassöffnung für Außenluft (29) und einem Abschnitt der hinteren vertikalen Wand (15), wo der Öffnungskantenabschnitt (30) damit verbunden ist, angeordnet ist.

5. Vorderstruktur nach einem der Ansprüche 1 bis 4, bei der eine Mehrzahl von Befestigungselementen (31, 32) den Öffnungskantenabschnitt (30) der Einlassöffnung für Außenluft (29) und den Abschnitt der hinteren vertikalen Wand (15), wo der Öffnungskantenabschnitt (30) damit verbunden ist, fixieren.

6. Vorderstruktur nach einem der Ansprüche 1 bis 5, **dadurch gekennzeichnet, dass** die Vorderstruktur ferner eine Wandstruktur (35) zum Verhindern des Eindringens von Wasser umfasst, die in integrierter Weise von dem Öffnungskantenabschnitt (30) der Einlassöffnung für Außenluft (29) vorragt und in eine Öffnung (23) passt, die in der hinteren vertikalen Wand (15) bereitgestellt ist.

7. Vorderstruktur nach Anspruch 6, **dadurch gekennzeichnet, dass** die Wandstruktur (35) zum Verhindern des Eindringens von Wasser in einer pyramidenartigen Röhrenform ausgebildet ist, deren Fläche mit der Erstreckung der Wandstruktur (35) in die Richtung des Inneren des inneren Raums (10) der vorderen Stirnwand (4) abnimmt.

8. Vorderstruktur nach einem der Ansprüche 1 bis 7, **dadurch gekennzeichnet, dass** eine Windschutzscheibe (9) auf der vorderen Stirnwand (4) an einem unteren Kantenabschnitt davon gestützt ist und eine Abstandsdistanz (L), um die der untere Kantenabschnitt der Windschutzscheibe (9) und jeder der zerbrechlichen Abschnitte (38, 39) in einer vertikalen Richtung voneinander beabstandet sind, so gestaltet ist, dass sie in den Bereich von 60 bis 80 mm fällt.

9. Vorderstruktur nach einem der Ansprüche 1 bis 8, **dadurch gekennzeichnet, dass** ein unterer Teil des Abschnitts der hinteren vertikalen Wand (15) einen weiteren zerbrechlichen Abschnitt (41) aufweist, der plastisch verformbar ist.

10. Vorderstruktur nach Anspruch 9, **dadurch gekennzeichnet, dass** der weitere zerbrechliche Abschnitt (41) eine S- oder Z-förmige Biegung ist, betrachtet von der Seite der Fahrzeugkarosserie (2).

11. Vorderstruktur nach einem der Ansprüche 1 bis 10, **dadurch gekennzeichnet, dass** der bzw. die zerbrechliche(n) Abschnitt(e) (38, 39, 41) einen Schlitz oder eine Kerbe umfasst bzw. umfassen.

## Revendications

1. Construction avant d'un véhicule à moteur (1) comprenant
un carénage frontal (4) qui s'étend dans une direction transversale du châssis du véhicule (2) et est formé pour posséder une section transversale en forme de U, vue d'un côté du châssis du véhicule (2); et
un climatiseur (26) possédant un orifice d'admission d'air extérieur (29) pour introduire l'air extérieur par un espace intérieur (10) du carénage frontal (4), une partie de bord d'ouverture (30) de l'orifice d'admission d'air extérieur (29) étant fixée à une paroi verticale postérieure (15) du carénage avant (4),
**caractérisée en ce**
**que** des parties fragiles (38,39) déformables plastiquement sont respectivement formées sur des parties intermédiaires verticales de la partie du bord d'ouverture (30) de l'orifice d'admission d'air extérieur (29) et une partie de la paroi verticale postérieure (15) à laquelle la partie de bord d'ouverture (30) est fixée de telle manière que les deux parties fragiles (38,39) soient positionnées en substance à la même hauteur l'une par rapport à l'autre pour promouvoir la déformation plastique du carénage frontal lorsqu'une force d'impact est appliquée sur le carénage frontal.

2. Construction avant selon la revendication 1, **caractérisée en ce que** les parties fragiles (38, 39) sont présentes en V, formant en substance le même angle.

3. Construction avant selon l'une des revendications 1 ou 2, **caractérisée en ce que** les parties fragiles (38, 39) ont une forme convexe saillant vers l'avant, vue depuis un côté du châssis du véhicule (2).

4. Construction avant selon l'une des revendications 1 à 3, **caractérisée en ce qu'**un élément d'étanchéité (34) est interposé entre la partie du bord d'ouverture (30) de l'orifice d'admission d'air extérieur (29) et une partie de la paroi verticale postérieure (15) à laquelle est fixée la partie du bord d'ouverture (30).

5. Construction avant selon l'une des revendications 1 à 4, dans laquelle plusieurs éléments de fixation (31,32) fixent la partie du bord d'ouverture (30) de l'orifice d'admission d'air extérieur (29) et une partie de la paroi verticale postérieure (15) à laquelle est fixée la partie de bord d'ouverture (30).

6. Construction avant selon l'une des revendications 1 à 5, **caractérisée en ce que** la construction avant comprend par ailleurs une nervure de prévention de la pénétration d'eau (35) qui déborde intégralement de la partie du bord d'ouverture (30) de l'orifice d'admission d'air extérieur (29) et s'ajuste dans une ouverture (23) ménagée dans la paroi verticale postérieure (15).

7. Construction avant selon la revendication 6, **caractérisée en ce que** la nervure de prévention de la pénétration d'eau (35) est formée d'une forme tubulaire semblable à une pyramide dont la surface diminue à mesure que la nervure (35) s'étend vers l'intérieur de l'espace interne (10) du carénage frontal (4).

8. Construction avant selon l'une des revendications 1 à 7, **caractérisée en ce qu'**un pare-brise (9) est soutenu sur le carénage frontal (4) sur une partie de bord inférieur de celui-ci et une distance d'écartement (L) dont sont espacées la partie de bord inférieur du pare-brise (9) et chacune des parties fragiles (38,39) l'une de l'autre dans une direction verticale est supposée se situer dans un intervalle de 60 à 80 mm.

9. Construction avant selon l'une des revendications 1 à 8, **caractérisée en ce qu'**une partie inférieure de la partie de la paroi verticale postérieure (15) possède une autre partie fragile (41) déformable plastiquement.

10. Construction avant selon la revendication 9, **caractérisée en ce que** l'autre partie fragile (41) est un coude en forme de S ou de Z, vu à partir du côté du châssis du véhicule (2).

11. Construction avant selon l'une des revendications 1 à 10, **caractérisée en ce que** la ou les parties fragiles (38, 39, 41) comprennent une fente ou une encoche.
